# EUROPÄISCHE PATENTSCHRIFT

(11) **EP 1 602 005 B1**
(45) Veröffentlichungstag und Bekanntmachung des Hinweises auf die Patenterteilung: **18.04.2007**
(21) Anmeldenummer: 04712014.2
(22) Anmeldetag: 18.02.2004
(51) Int. Cl.: G02F 1/15

(54) **ELEKTROCHROMES BAUTEIL MIT ELEKTROLYTFOLIE UND HERSTELLUNGSVERFAHREN DAZU**
ELECTROCHROMIC COMPONENT AND PRODUCTION METHOD THEREFOR
ELEMENT ELECTROCHROMIQUE ET PROCEDE DE PRODUCTION DE CET ELEMENT

(30) Priorität: 12.03.2003 DE 10311183
(43) Veröffentlichungstag der Anmeldung: 07.12.2005
(73) Patentinhaber: SIEMENS AKTIENGESELLSCHAFT, 80333 München (DE)
(72) Erfinder: BRABEC, Christoph, 4040 Linz (AT); HAUCH, Jens, 91056 Erlangen (DE)
(86) Internationale Anmeldenummer: PCT/EP2004/001552
(87) Internationale Veröffentlichungsnummer: WO 2004/082039

(56) Entgegenhaltungen:
- EP-A- 1 227 362
- EP-A- 1 253 461
- US-A- 5 581 394
- US-B1- 6 452 711

## Beschreibung

Die Erfindung betrifft ein elektrochromes Bauteil, beispielsweise ein "smart window" mit verbesserter Lebensdauer.

Bekannt sind elektrochrome Bauteile, bei denen zwischen zwei Elektroden ein flüssiger Elektrolyt eingebettet ist. Die elektrochromen Bauteile (smart windows und/oder Displays) funktionieren im Allgemeinen über eine erste, bevorzugt transparente (optional farbige) Elektrode, einer darauffolgenden elektrochromen Schicht, einer Elektrolytschicht, einem Ionenspeicher und einer zweiten, optional auch farbigen oder transparenten Gegenelektrode, die auch die Funktion eines Ionenspeichers erfüllen kann, so dass eine separate Ionenspeicherschicht entfällt.

Es gibt Materialien, die sich sowohl als elektrochrome Schicht als auch als teilabsorbierende (das Licht zum Teil durchlassende) Elektrode eignen. Darunter fallen auch organische Materialien, wie zum Beispiel PEDOT/PSS oder PANI. Schichten aus diesen Materialien wie beispielsweise PANI und/oder PEDOT/PSS können bei hinreichender Leitfähigkeit (vom Dotierungsgrad abhängig) auch die Funktion der Elektrode übernehmen, so dass ein organisches elektrochromes Bauteil im Extremfall nur mehr 3 aktive Schichten aus vorwiegend organischem Material umfasst (Teilsubstitutionen durch anorganische, in der Halbleitertechnologie seit langem bekannte Materialien sind immer möglich und sollen durch den Begriff "organisches elektrochromes Bauteil" nicht ausgeschlossen sein):

### Beispiel für eine Schichtfolge:

Auf einem Substrat befindet sich eine erste teilabsorbierende Elektrode, die auch elektrochrome Effekte zeigt, darauf eine Elektrolyt-Schicht und anschließend eine weitere elektrochrome Schicht, die unter Umständen auch als Ionenspeicher wirkt und die auch mit einer Elektrodenschicht durch die hohe Leitfähigkeit des elektrochromen, als Ionenspeicher wirkenden Materials zusammenfallen kann.

Aus der EP 1 227 362 A1, die alle Merkmale der Präambel von Anspruch 1 offenbart, ist ein elektrochromes Verbundglas bekannt, das zwei mit transparenten leitfähigen Schichten versehene Glasscheiben umfasst, auf denen mittels elektrochemischer Technologie elektrochrome Schichten abgeschieden sind. Die beschichteten Glasscheiben sind durch eine Elektrolytfolie aus Polyvinylbutyral miteinander verbunden.

Aus der US-B1-6452711 ist ein elektrochromes Bauteil bekannt, das eine Schichtstruktur hat, wobei zwei Schichten zumindest elektrisch leitfähiges und elektrochromes Polydioxythiophene ausgewählt aus der gleichen Gruppe von Verbindungen, umfassen.

Aus der US-A-5581394 ist ein Verfahren zur Herstellung eines festen Polymerelektrolyten für ein elektrochromes Bauteil bekannt.

Schließlich ist aus der EP 1253 461 A3 ein elektrochromes Sicherheitsglas bekannt, bei dem ein fester Elektrolyt zwischen Trägermaterialien angeordnet ist.

Als Elektrolytschicht werden zurzeit flüssige bzw. gelartige bzw. polymerbasierende Elektrolyte verwendet, die in einem Druckprozess (aus einer flüssigen Phase) aufgetragen werden. Dabei ist die Versiegelung als auch die Handhabung von den flüssigen oder gelartigen Elektrolyten ein schwieriger Prozessschritt.

Aufgabe der Erfindung ist daher, ein elektrochromes Bauteil zur Verfügung zu stellen, das eine höhere Lebensdauer mit einer vereinfachten Prozessierbarkeit verbindet.

Diese Aufgabe wird durch den Gegenstand der Ansprüche im Zusammenhang mit der Beschreibung gelöst.

Gegenstand der Erfindung ist ein elektrochromes Bauteil, eine erste, elektrochrom aktive Elektrode und eine Gegenelektrode mit einem dazwischen angeordneten festen Elektrolyten umfassend, wobei der Elektrolyt mit der ersten Elektrode oder der Gegenelektrode bedruckt ist. Außerdem ist Gegenstand der Erfindung ein Verfahren zur Herstellung dieses elektrochromen Bauteils durch Bedrucken einer Elektrolytfolie mit organischem leitfähigem Material auf zumindest einer Seite, wobei das organische leitfähige Material eine elektrochrom aktive Elektrode darstellt.

Durch die Erfindung lässt sich beispielsweise ein organisches elektrochromes Bauteil, mit der Funktion eines "smart windows" aufbauen. (Ebenso wäre ein Display denkbar). Bisher wird die Elektrolytschicht aus der Lösung aufgetragen, danach wird die flüssige Schicht durch eine aufwendige Versiegelung vor dem Austrocknen bzw. Verrinnen bewahrt. Üblicherweise wird eine Folie verwendet, auf der bereits die zweite Elektrode und die zweite elektrochrome Schicht, in die gegebenenfalls ein Ionenspeicher integriert ist, aufgetragen sind. Um den Elektrolyten zu schützen, waren Distanzhalter und aufwendige Versiegelungen nötig.

Durch die Verwendung einer Elektrolytfolie fällt dieses Problem weg. Die beiden elektrochromen Schichten können - wie in der EP1 227 362 beschrieben - jeweils auf einer Elektrode aufgebracht werden, und das Schichtsystem wird dann mittels der Elektrolytfolie verbunden. Erfindungsgemäß aber wird die Elektrolytfolie einseitig/zweiseitig bedruckt und dann mit den Elektroden durch einen Prozessschritt verbunden (laminieren, aufschmelzen.....).

Beispielhafte Materialien für die Elektrolytfolie ist:
Hauptbestandteil: Poly Vinyl Butyral (PVB)
Weichmacher: Ethylene Glykol (mehrere Möglichkeiten beispielsweise Tributoyethylphosphat (TBEP),Propylencarbonat (PC), Tetraethylenglykoldimethylether (G4DME)
Triethylenglykol-bis-n-heptanoat (3G7), Polyglykoldimethylether 500 (PEG-DME 500), Polyglykol BB 300 (PEG BB 300)) Leitsalz: LiClO4
Füllstoffe, Additive: z.B.: Si02 Fillers, Ti02...... nach Prozessierbarkeit und Bedarf.

In der Verwendung einer Elektrolytfolie anstatt von wie bisher verwendeten flüssigen oder gelartigen Elektrolyten für die Darstellung von organischen elektrochromen Bauteilen wird die Lebensdauer des Bauteils und die Effizienz des Herstellungsverfahrens enorm erhöht. Dies insbesondere durch die Kombination von Drucktechnologien für elektrochrome Farben mit der Kunststoffprozessierung-Technologie für (Elektrolyt) Folien.

Die Erfindung löst das Problem der Elektrolytauftragung bzw. der Elektrolytversiegelung indem sie die Verwendung einer Elektrolytfolie vorschlägt, auf die die jeweiligen elektrochromen Schichten und/oder Elektroden abgeschieden werden können.

Das Verfahren zur Herstellung offenbart eine Möglichkeit, den Elektrolyten auch in einem Trocken-Prozessschritt (z.B. Laminieren, Aufschmelzen...) mit der elektrochromen Schicht zu verbinden.

Die Erfindung betrifft ein organisches elektrochromes Bauteil, beispielsweise ein sogenanntes "smart window" und/oder ein Display mit verbesserter Lebensdauer. Nach der Erfindung wird der herkömmliche flüssige Elektrolyt, der mit aufwendigen Versiegelungstechniken vor Umwelteinflüssen zu schützen war, durch einen stabileren und leichter zu prozessierenden festen Elektrolyten ersetzt.

## Patentansprüche

1. Elektrochromes Bauteil, eine erste.Elektrode und eine Gegenelektrode mit einem dazwischen angeordneten festen Elektrolyten umfassend, **dadurch gekennzeichnet, dass** der Elektrolyt zumindest zum Teil mit der ersten Elektrode oder der Gegenelektrode bedruckt ist und diese Elektrode elektrochrom aktiv ist.

2. Verfahren zur Herstellung des elektrochromen Bauteils gemäß Anspruch 1, **gekennzeichnet durch** folgenden Schnitt: Bedrucken einer Elektrolytfolie mit organischem leitfähigem Material auf zumindest einer Seite, wobei das organische leitfähige Material elektrochrom aktiv ist und die erste Elektrode darstellt und wobei die Elektrolytfolie den festen Electrolyten der elektrochromen Bauteils darstellt.

3. Verfahren nach Anspruch 2, bei dem das organische leitfähige Material aus einer Lösung prozessiert wird.

## Claims

1. Electrochromic component, comprising a first electrode and a counter-electrode with a solid electrolyte arranged therebetween, **characterised in that** the electrolyte is printed at least in part with the first electrode or the counter-electrode, and this electrode is electrochromically active.

2. Method for production of the electrochromic component according to claim 1, **characterised by** the following stage: printing an electrolyte membrane with organic conductive material on at least one side, the organic conductive material being electrochromically active, and representing the first electrode, and the electrolyte membrane representing the solid electrolyte of the electrochromic component.

3. Method according to claim 2, in which the organic conductive material is processed from solution.

## Revendications

1. Elément électrochrome comprenant une première électrode et une contre-électrode ainsi qu'un électrolyte solide situé entre les deux, **caractérisé en ce que** l'électrolyte est imprimé au moins en partie de la première électrode ou contre-électrode et cette électrode est active de manière électrochrome.

2. Procédé de fabrication de l'élément électrochrome selon la revendication 1, **caractérisé par** l'étape suivante : imprimer sur une feuille d'électrolyte un matériau organique conducteur sur au moins un côté, le matériau organique conducteur étant actif de manière électrochrome et représentant la première électrode et la feuille d'électrolyte représentant l'électrolyte solide de l'élément électrochrome.

3. Procédé selon la revendication 2, dans lequel le matériau organique conducteur est traité à partir d'une solution.
